# EUROPEAN PATENT APPLICATION

(11) **EP 1 184 589 A2**
(43) Date of publication of application: **06.03.2002**
(21) Application number: 01120558.0
(22) Date of filing: 29.08.2001
(51) Int. Cl.: F16F 1/387

(54) **A resilient support with anisotropic tangential reaction and a method of defining its characteristics**

(30) Priority: 31.08.2000 IT TO000832
(71) Applicant: C.F. GOMMA S.p.A., 25050 Passirano (Brescia) (IT)
(72) Inventor: Gazzoli, Gianenrico, 25035 Ospitaletto (Brescia) (IT)
(74) Representative: Quinterno, Giuseppe

(57) **Abstract**

The support (S) comprises an outer rigid framework (1) and an inner rigid framework (2) between which an element (3) made of resiliently-deformable material is interposed. A plurality of longitudinal cavities (4) is defined in the element (3) and longitudinal inserts (5) are positioned in the resiliently-deformable material (3). The shape and arrangement of the inner framework (2), of the cavities (4), and of the inserts (5) are such that, when the support (S) is subjected to radial forces, it can react in a differentiated manner, according to the direction of the forces.

## Description

The present invention relates to a resilient support and, more specifically, to a support of the type comprising an outer rigid framework and an inner rigid framework between which at least one element made of resiliently-deformable material is interposed.

The aim of the present invention is to provide a resilient support of this type which is characterized by an anisotropic tangential reaction in use.

This and other aims are achieved, according to the invention, by a resilient support the main characteristics of which are defined in appended Claim 1.

The invention also relates to a method of defining the resilience characteristics of a resilient support of this type, the method having the characteristics defined in Claims 9 to 11.

Further characteristics and advantages of the invention will become clear from the following detailed description, given purely by way of non-limiting example with reference to the appended drawing which shows, in cross-section, the structure of a support according to the invention.

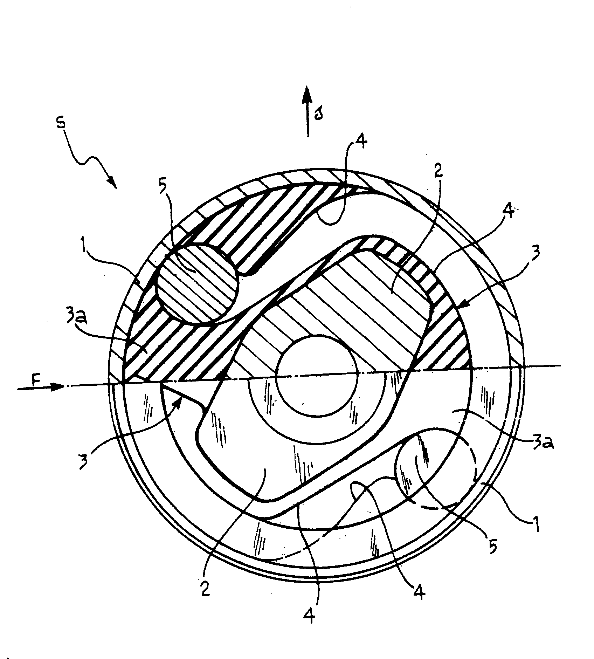

A resilient support according to the invention is generally indicated S in Figure 1.

The support comprises an outer rigid, for example, cylindrical framework 1, and an inner rigid framework 2. In the embodiment shown by way of example, the inner framework 2 has an elongate, substantially elliptical shape in cross-section.

An element 3 made of resiliently-deformable material, for example, an elastomeric material, is interposed between the frameworks 1 and 2. This material is connected firmly to the rigid frameworks 1 and 2, for example, by moulding and vulcanization or by another known system.

In the embodiment shown, the element 3 made of resiliently-deformable material comprises two substantially spoke-shaped portions 3a which extend between the frameworks 1 and 2 in equiangularly-spaced positions. In particular, in the embodiment shown in Figure 1, each of the spoke-shaped portions 3a extends between a side of an end of the inner framework 2 and the outer framework 1.

Longitudinal cavities 4 having an arcuate shape in cross-section are defined in the resiliently-deformable material, between the spoke-shaped portions 3a.

Longitudinal inserts, for example, cylindrical inserts, incorporated in the resiliently-deformable material 3, are indicated 5. In the embodiment shown, the inserts 5 are adjacent the radially outermost portion of each of the spoke-shaped portions 3a formed by the resiliently-deformable material.

The cavities 4 may contain a liquid.

According to the invention, the shape and arrangement of the inner framework 2, of the cavities 4 and of the inserts 5, as well as the geometry of the elements made of resiliently-deformable material are such that the resilient support S can react to radial forces between the two frameworks 1 and 2 in a differentiated manner, according to the direction of the forces.

In particular, with reference to the example shown in Figure 1, the support S reacts to a stress F acting along the axis and in the direction of the arrow shown in Figure 1 by a relative movement of the inner framework 2 which movement (also) has a component perpendicular to the direction of the force F, that is, a component along the axis indicated by the arrow S of Figure 1.

The tangential or circumferential anisotropy of the reaction of the resilient support can be calibrated at the production stage, according to the requirements of use, both by altering the characteristics of shape and of resilience of the elements made of deformable material which are interposed between the frameworks as well as the shapes of the cavities defined between them, and by altering the shape, the position, and possibly the resilience characteristics of the inserts used.

Resilient supports with anisotropic reaction according to the invention can be used for the support of motor-vehicle bodywork suspension units. In this case, the anisotropy of the reaction enables the conflicting requirements connected with comfort (a high degree of axial flexibility) and with "handling" (low tangential deformation) to be satisfied, minimizing the vibrations transmitted.

With the use of supports according to the invention, it is thus possible to optimize the desired self-alignment, oversteer, or under-steer effects which can be achieved by a motor-vehicle suspension.

A further important aspect of the support according to the invention lies in the fact that its characteristic of a high degree of dynamic vertical resilience, which is essential for good comfort in a motorcar, is defined substantially by the geometry of its constituent parts and by the hardness of the resiliently-deformable material, and this is achieved fairly independently of the presence of the inserts and of the cavities.

In contrast, the characteristic of low deformation under tangential stress, which is essential to satisfy the handling requirements, is defined substantially by these very, latter characteristics.

Since the high degree of dynamic vertical resilience of the support and the characteristic of low deformation under tangential stress are in fact substantially "disconnected" from one another, they can be adapted to the most varied user requirements at the design and production stage, that is, by varying the hardness of the resiliently-deformable material, the internal geometry of the support, and its polar position, without significantly changing the geometry of the rigid elements for which constraints connected with space requirements normally apply and which in any case require expensive tooling for their construction or modification.

The effect of the anisotropic reaction to tangential stresses can also be varied by changing the resilience of the inserts, for example, by the selection of different materials for the inserts.

Naturally, the principle of the invention remaining the same, the forms of embodiment and details of construction may be varied widely with respect to those described and illustrated purely by way of non-limiting example, without thereby departing from the scope of the invention as defined in the appended claims.

## Claims

1. A resilient support (S) comprising an outer rigid framework (1) and an inner rigid framework (2) between which an element (3) made of resiliently-deformable material is interposed,
the support being **characterized in that** a plurality of longitudinal cavities (4) is defined in the element (3) and longitudinal inserts (5) are positioned in the resiliently-deformable material (3),
the shape and arrangement of the inner framework (2), of the cavities (4), and of the inserts (5) being such that, when the support (S) is subjected to radial forces, it can react in a differentiated manner, according to the direction of the forces.

2. A resilient support according to Claim 1 in which the shape and arrangement of the inner framework (2), of the cavities (4), and of the inserts (5), as well as the resilience characteristics of the inserts (5) are such that, when radial forces acting in some directions are applied to the support, the support can react by a movement having a component perpendicular to the directions of the forces.

3. A resilient support according to Claim 1 or Claim 2 in which, in cross-section, the outer framework (1) has a substantially cylindrical internal profile and the inner framework (2) has an elongate, substantially elliptical shape.

4. A resilient support according to any one of the preceding claims in which the element (3) made of resiliently-deformable material comprises a plurality of substantially spoke-shaped portions (3a) which extend between the frameworks (1, 2) in equiangularly spaced-apart positions.

5. A resilient support according to Claims 3 and 4 in which, in cross-section, each of the spoke-shaped portions (3a) extends between a side of an end of the inner framework (2) and the outer framework (1).

6. A resilient support according to Claim 4 or Claim 5 in which each insert (5) is adjacent one of the spoke-shaped portions (3a).

7. A resilient support according to any one of Claims 4 to 6 in which the spokes (3a) have cavities (4) which contain a liquid.

8. A method of determining the resilience characteristics f a resilient support (S) according to any one of the preceding claims, **characterized in that** the hardness of the resiliently-deformable material (3) is selected in dependence on the desired dynamic resilience characteristic of the support (S).

9. A method according to Claim 8, **characterized in that** the geometrical characteristics of shape and/or position of the inserts (5) and of the cavities (4) are selected in dependence on the desired tangential deformability characteristics of the support (S).

10. A method according to Claim 9, **characterized in that** the resilience characteristics of the inserts (5) are also determined in dependence on the desired tangential deformability characteristics of the support (S).

11. Use of a resilient support according to one or more of Claims 1 to 7 for the connection of a suspension unit to the bodywork of a motor vehicle.
